# EUROPEAN PATENT APPLICATION

(11) **EP 4 545 332 A1**
(43) Date of publication of application: **30.04.2025**
(21) Application number: 23826860.1
(22) Date of filing: 22.05.2023
(51) Int. Cl.: B60K 5/12, F16F 1/387, F16F 15/08, B62D 24/02

(54) **CAB MOUNT**

(30) Priority: 24.06.2022 JP 2022101781
(71) Applicant: Prospira Corporation, Kanagawa prefecture 212-0013 (JP)
(72) Inventor: SATO, Shunji, Kawasaki city, Kanagawa 212-0013 (JP); SUZUKI, Hironobu, Toyota-shi, Aichi 471-8571 (JP)
(74) Representative: Scott, Stephen John
(86) International application number: PCT/JP2023/018965
(87) International publication number: WO 2023/248672

(57) **Abstract**

A cab mount 1 includes an outer cylinder 11 configured to be attached to a vehicle body frame F, an inner cylinder 12 configured to be inserted inside the outer cylinder and attached to a cab C, body rubber 13 configured to connect between an inner peripheral surface of the outer cylinder and an outer peripheral surface of the inner cylinder with each other, and a regulation member 14 that is configured to be attached to an upper end opening edge of the outer cylinder, and provided so as to protrude inward in a radial direction than the inner peripheral surface of the outer cylinder and to leave a gap in the radial direction between the regulation member and the outer peripheral surface of the inner cylinder.

## Description

### TECHNICAL FIELD

The present disclosure relates to a cab mount.

### BACKGROUND

Cab mounts that include an outer cylinder attached to a vehicle body frame, an inner cylinder inserted inside the outer cylinder and attached to a cab, and body rubber connecting between an inner peripheral surface of the outer cylinder and an outer peripheral surface of the inner cylinder with each other, as illustrated in Patent Literature (PTL) 1 below, are conventionally known.

### CITATION LIST

### Patent Literature

PTL 1: JP2008-175333A

### SUMMARY

### (Technical Problem)

However, in the conventional cab mounts described above, when a large load is applied due to, for example, a collision of a vehicle or other reason, and the outer and inner cylinders relatively displace significantly in a radial direction, a regulation member provided between the outer and inner cylinders regulates this displacement, thus causing the risk of deteriorating vibration damping performance during normal driving.

The present disclosure is made with such a circumstance. It would be helpful to provide a cab mount that can regulate a relative displacement between outer and inner cylinders in a radial direction when a large load is applied, without deteriorating vibration damping performance.

### (Solution to Problem)

In order to solve the above problem and achieve such an object, a cab mount according to the present disclosure includes:
an outer cylinder configured to be attached to a vehicle body frame;
an inner cylinder configured to be inserted inside the outer cylinder and attached to a cab;
body rubber configured to connect between an inner peripheral surface of the outer cylinder and an outer peripheral surface of the inner cylinder with each other; and
a regulation member configured to be attached to an upper end opening edge of the outer cylinder, the regulation member being configured to be provided so as to protrude inward in a radial direction than the inner peripheral surface of the outer cylinder and to leave a gap in the radial direction between the regulation member and the outer peripheral surface of the inner cylinder.

### (Advantageous Effect)

According to the present disclosure, it is possible to regulate a relative displacement between outer and inner cylinders in a radial direction when a large load is applied, without deteriorating vibration damping performance.

### BRIEF DESCRIPTION OF THE DRAWINGS

In the accompanying drawings:
FIG. 1 is a longitudinal cross-sectional view of a cab mount illustrated as a first embodiment;
FIG. 2 is a cross-sectional view viewed from the arrows II-II of FIG. 1;
FIG. 3A is a diagram illustrating a manufacturing method of the cab mount illustrated in FIG. 1;
FIG. 3B is a diagram illustrating the manufacturing method of the cab mount illustrated in FIG. 1;
FIG. 3C is a diagram illustrating the manufacturing method of the cab mount illustrated in FIG. 1;
FIG. 3D is a diagram illustrating the manufacturing method of the cab mount illustrated in FIG. 1;
FIG. 4 is a longitudinal cross-sectional view of a cab mount illustrated as a second embodiment;
FIG. 5 is a longitudinal cross-sectional view of a cab mount illustrated as a third embodiment; and
FIG. 6 is a cross-sectional view viewed from the arrows VI-VI of FIG. 5.

### DETAILED DESCRIPTION

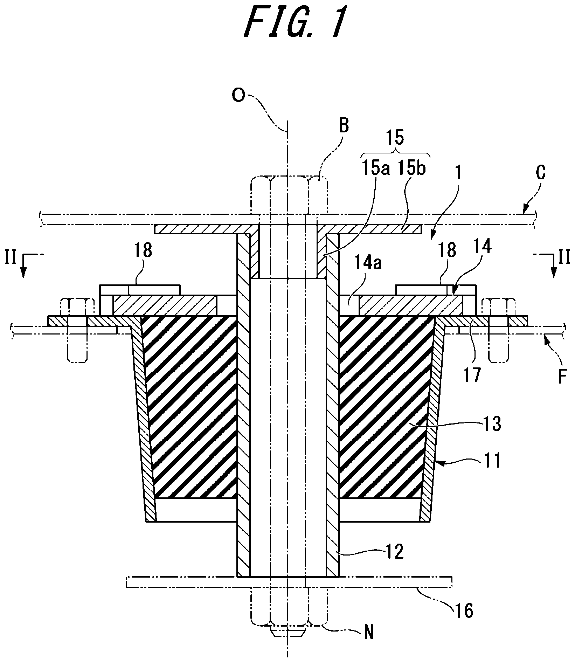

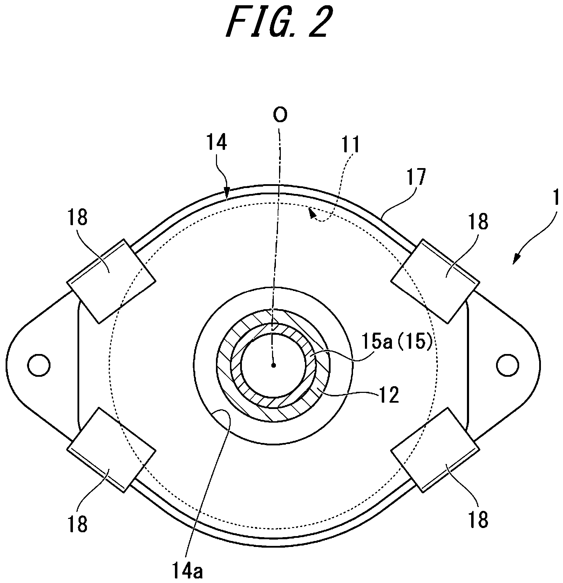

A first embodiment of a cab mount will be described below with reference to FIGS. 1 and 2.

A cab mount 1 includes an outer cylinder 11, an inner cylinder 12, body rubber 13, and a regulation member 14.

The outer cylinder 11 and the inner cylinder 12 are arranged coaxially with a central axis line O extending in a vertical direction. Hereinafter, when viewed from the vertical direction, a direction intersecting the central axis line O is referred to as a radial direction, and a direction circumferential to the central axis line O is referred to as a circumferential direction.

On an upper end of the outer cylinder 11, a first flange 17, which protrudes outward in the radial direction and extends continuously throughout the entire length in the circumferential direction, is formed. The outer cylinder 11 is attached to a vehicle frame F via the first flange 17. A lower surface of the first flange 17 is supported by the vehicle frame F.

The inner cylinder 12 is inserted inside the outer cylinder 11, and is attached to a mounting wall of a cab C. Both ends of the inner cylinder 12 in the vertical direction protrude separately from the outer cylinder 11 to both sides in the vertical direction.

A mounting plate 15 is provided at an upper end of the inner cylinder 12. The mounting plate 15 includes a fit tube 15a that is fitted into the upper end of the inner cylinder 12, and a second flange 15b that protrudes outward in the radial direction from the upper end of the fit tube 15a and extends continuously throughout the entire length in the circumferential direction. The second flange 15b straddles an upper end opening edge of the inner cylinder 12 in the radial direction. The inner cylinder 12 is attached to the mounting wall of the cab C via the second flange 15b. An upper surface of the second flange 15b is supported by a lower surface of the mounting wall of the cab C. A fixing bolt B is integrally inserted inside each of the mounting plate 15 and the inner cylinder 12. Note that, the mounting plate 15 may not be provided.

A support plate 16 is provided at a lower end of the inner cylinder 12. A lower end opening edge of the inner cylinder 12 is in contact with an upper surface of the support plate 16. The fixing bolt B penetrates the support plate 16 and the mounting wall of the cab C in the vertical direction. The fixing bolt B is a bolt with a head. The head is supported on an upper surface of the mounting wall of the cab C, and a lower end of the fixing bolt B protrudes downward from the support plate 16. By screwing a nut N onto the lower end of the fixing bolt B, the inner cylinder 12 is fixed by being sandwiched between the support plate 16 and the mounting wall of the cab C in the vertical direction.

The body rubber 13 connects between an inner peripheral surface of the outer cylinder 11 and an outer peripheral surface of the inner cylinder 12 with each other. The body rubber 13 is vulcanized and adheres to the inner peripheral surface of the outer cylinder 11 and the outer peripheral surface of the inner cylinder 12. The body rubber 13 is formed in a tubular shape, and is arranged coaxially with the central axis line O. An upper end opening edge of the body rubber 13 is positioned at the same level as or below an upper surface of the first flange 17 in the vertical direction.

The regulation member 14 protrudes inward in the radial direction than the inner peripheral surface of the outer cylinder 11, and is attached to an upper end opening edge of the outer cylinder 11 with leaving a gap in the radial direction between the regulation member 14 and the outer peripheral surface of the inner cylinder 12.

The regulation member 14 is formed in the shape of a plate. The regulation member 14 is preferably formed of a material with higher tensile strength than a material forming the outer cylinder 11.

The regulation member 14 is pierced by the inner cylinder 12 in the vertical direction. The regulation member 14 has an inner circumferential surface 14a that surrounds the entire circumference of the outer peripheral surface of the inner cylinder 12. The inner circumferential surface 14a of the regulation member 14 and the outer peripheral surface of the inner cylinder 12 each present a circular shape when viewed in the vertical direction. The gap in the radial direction between the inner circumferential surface 14a of the regulation member 14 and the outer peripheral surface of the inner cylinder 12 is constant throughout the entire length in the circumferential direction. The inner circumferential surface 14a of the regulation member 14 is positioned inside an outer circumferential surface of the second flange 15b of the mounting plate 15 in the radial direction. The regulation member 14 is provided in a non-adhering state to the body rubber 13. A lower surface of the regulation member 14 is in contact with the upper end opening edge of the body rubber 13. Note that, the lower surface of the regulation member 14 may be separated above from the upper end opening edge of the body rubber 13.

Here, the first flange 17 of the outer cylinder 11 is provided with latching pieces 18 that fix the regulation member 14 on the upper end opening edge of the outer cylinder 11 and on the upper surface of the first flange 17. The multiple latching pieces 18 are provided at intervals in the circumferential direction. The latching pieces 18 are formed integrally with the first flange 17, and are folded inward in the radial direction to cover the upper end opening edge of the outer cylinder 11, so that the latching pieces 18 catch and fix the regulation member 14 in the vertical direction between each latching piece 18 and the upper end opening edge of the outer cylinder 11 and the upper surface of the first flange 17. The latching pieces 18 are positioned below a lower surface of the second flange 15b of the mounting plate 15.

Note that, the latching pieces 18 may not be provided in the first flange 17, and the regulation member 14 may be attached to the upper end opening edge of the outer cylinder 11 by, for example, welding or using fastening members such as bolts.

A manufacturing method of the cab mount 1 configured as described above will be described.

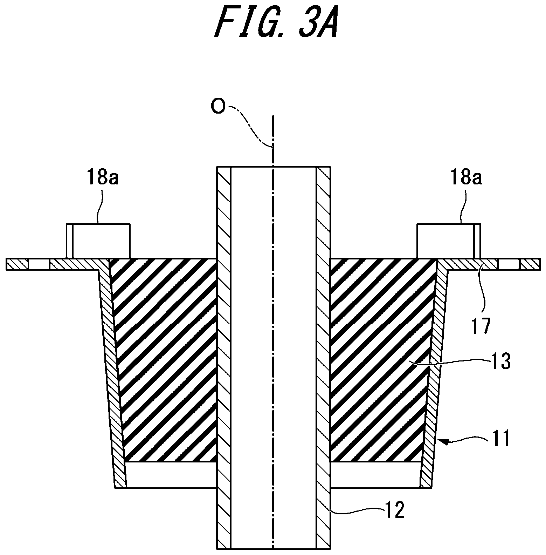

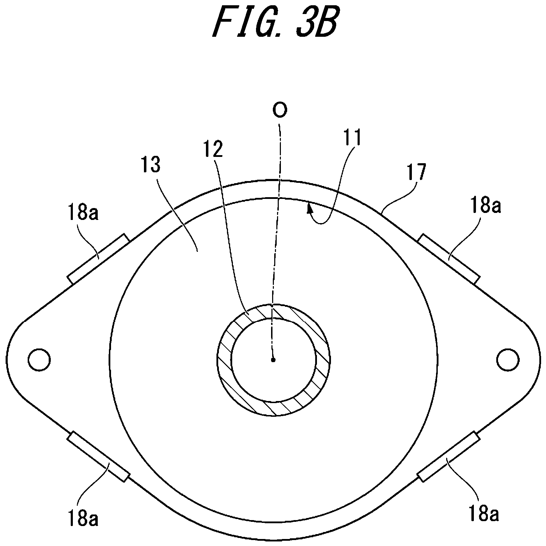

First, as illustrated in FIGS. 3A and 3B, by injecting unvulcanized rubber, using the outer cylinder 11 and the inner cylinder 12 as inserts, to vulcanize and mold the body rubber 13, the body rubber 13 is vulcanized and adheres to the inner peripheral surface of the outer cylinder 11 and the outer peripheral surface of the inner cylinder 12.

At this time, the outer cylinder 11 is provided with planned formation pieces 18a for the latching pieces 18. The planned formation pieces 18a are formed in the shape of flat plates that extend straight upward from the first flange 17.

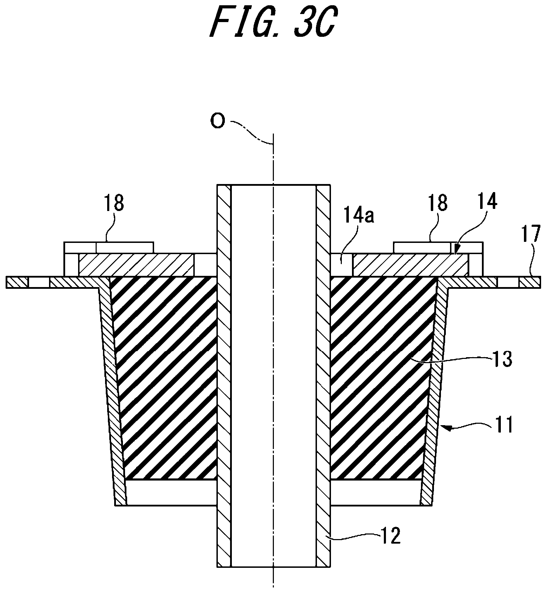

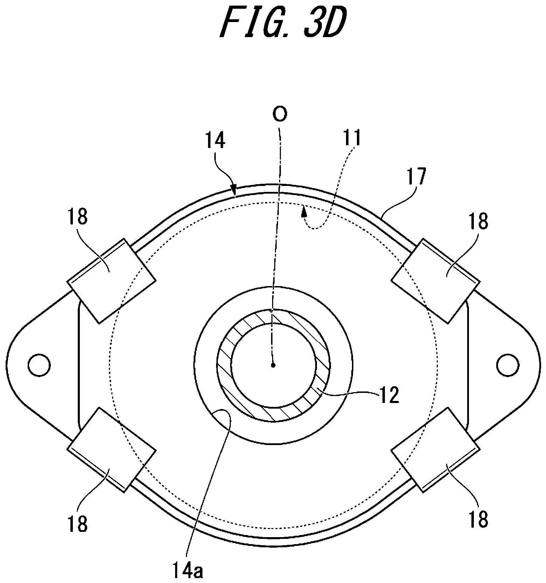

Next, as illustrated in FIGS. 3C and 3D, while inserting the inner cylinder 12 inside the regulation member 14 from above the inner cylinder 12, the regulation member 14 is placed on the upper end opening edge of the outer cylinder 11 and the upper surface of the first flange 17. The planned formation pieces 18a for the latching pieces 18 are then folded inward in the radial direction so as to cover the upper end opening edge of the outer cylinder 11, to form the latching pieces 18, so that the latching pieces 18 catch and fix the regulation member 14 in the vertical direction between each latching piece 18 and the upper end opening edge of the outer cylinder 11 and the upper surface of the first flange 17.

Next, as illustrated in FIGS. 1 and 2, the mounting plate 15 is attached to the inner cylinder 12 by fitting the fit tube 15a into the upper end of the inner cylinder 12 and placing the second flange 15b on the upper end opening edge of the inner cylinder 12.

As described above, in the cab mount 1 according to the present embodiment, the regulation member 14 protrudes inward in the radial direction than the inner peripheral surface of the outer cylinder 11, and is attached to the upper end opening edge of the outer cylinder 11 with leaving the gap in the radial direction between the regulation member 14 and the outer peripheral surface of the inner cylinder 12. Therefore, it becomes possible to make the inner cylinder 12 collide with the regulation member 14 only when a large load is applied, thus making it possible to regulate a relative displacement in the radial direction between the outer cylinder 11 and the inner cylinder 12, without deteriorating vibration damping performance during normal driving.

Due to the provision of the regulation member 14 in a non-adhering state to the body rubber 13, it becomes possible to prevent elastic deformation of the body rubber 13 from being suppressed by the regulation member 14 when vibration is applied, thus demonstrating the vibration damping performance as designed.

Since the mounting plate 15 with the second flange 15b is separate from the inner cylinder 12, it is not necessary to insert the second flange 15b inside the regulation member 14 when manufacturing the cab mount 1. Therefore, it is possible to make the diameter of the inner circumferential surface 14a of the regulation member 14 smaller than the outer diameter of the second flange 15b, thus reducing bulkiness of the regulation member 14.

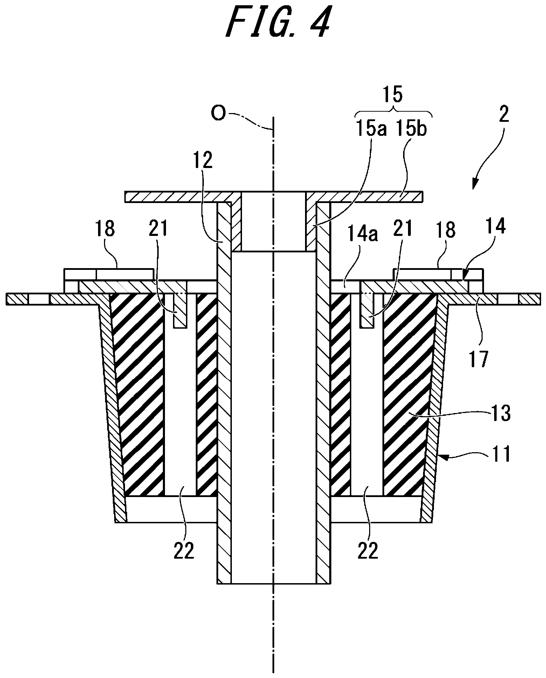

Next, a cab mount 2 according to a second embodiment of the present disclosure will be described with reference to FIG. 4.

In this second embodiment, the same components as in the first embodiment are denoted by the same reference numerals, and descriptions thereof are omitted. Only differences are described.

In the present embodiment, ribs 21, which protrude in the vertical direction, are provided at an inner end of the regulation member 14 in the radial direction. The ribs 21 protrude downward from an opening rim of the inner circumferential surface 14a in the lower surface of the regulation member 14. The ribs 21 are formed integrally with the regulation member 14.

Depressions 22, which are depressed downward and into which the ribs 21 are inserted, are formed in the upper end opening edge of the body rubber 13. The multiple ribs 21 and the multiple depressions 22 are provided at intervals in the circumferential direction.

As described above, the cab mount 2 according to the present embodiment is provided with the ribs 21, which protrude in the vertical direction, at the inner end of the regulation member 14 in the radial direction. Therefore, it is possible to secure the rigidity of the regulation member 14, against an impact force applied in the radial direction from the inner cylinder 12 to the regulation member 14.

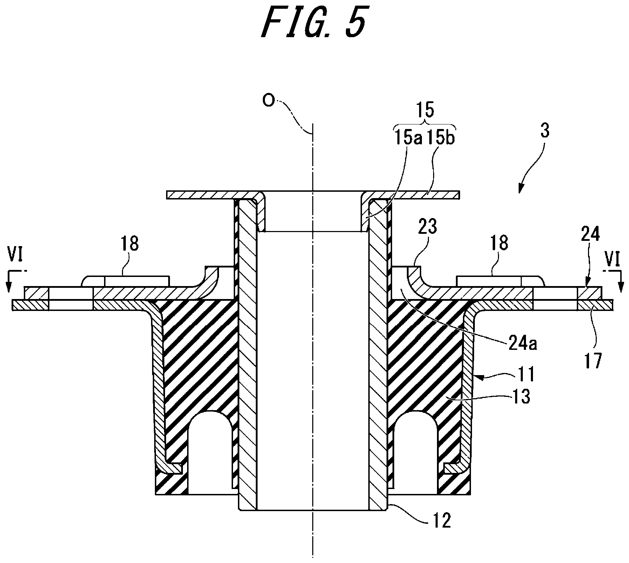

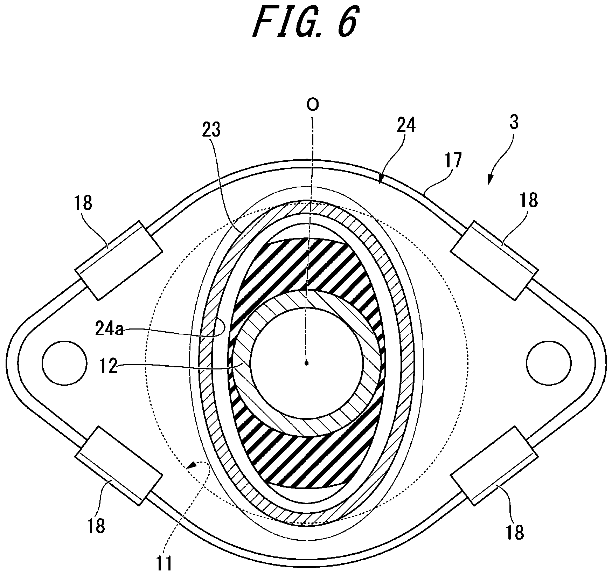

Next, a cab mount 3 according to a third embodiment of the present disclosure will be described with reference to FIGS. 5 and 6.

In this third embodiment, the same components as in the first embodiment are denoted by the same reference numerals, and descriptions thereof are omitted. Only differences are described.

In this embodiment, a rib 23, which protrudes in the vertical direction, is provided at an inner end of a regulation member 24 in the radial direction. The rib 23 protrudes upward from an opening rim of an inner circumferential surface 24a in an upper surface of the regulation member 24. The rib 23 extends continuously throughout the entire length in the circumferential direction. The rib 23 is formed integrally with the regulation member 24. The regulation member 24 is attached to the vehicle frame F, together with the first flange 17 of the outer cylinder 11, with the same bolts.

The inner circumferential surface 24a of the regulation member 24 presents an elliptical shape when viewed in the vertical direction. The inner circumferential surface 24a of the regulation member 24 is arranged coaxially with the central axis line O. The outer peripheral surface of the inner cylinder 12 presents a circular shape when viewed in the vertical direction. The distance between the inner circumferential surface 24a of the regulation member 24 and the outer peripheral surface of the inner cylinder 12 in the radial direction is maximized in a long axis direction of the inner circumferential surface 24a of the regulation member 24 when viewed in the vertical direction, and is minimized in a short axis direction of the inner circumferential surface 24a of the regulation member 24.

The cab mount 3 is attached to a vehicle such that a gap between the inner circumferential surface 24a of the regulation member 24 and the outer peripheral surface of the inner cylinder 12 is the narrowest in a vehicle front-and-back direction. In other words, the cab mount 3 is attached to the vehicle in such an orientation that, when viewed in the vertical direction, the short axis direction of the inner circumferential surface 24a of the regulation member 24 coincides with the vehicle front-and-back direction.

As described above, the cab mount 3 according to the present embodiment is provided with the rib 23, which protrudes in the vertical direction, at the inner end of the regulation member 24 in the radial direction. Therefore, it is possible to secure the rigidity of the regulation member 24, against an impact force applied in the radial direction from the inner cylinder 12 to the regulation member 24.

Since the cab mount 3 is attached to the vehicle such that the gap between the inner circumferential surface 24a of the regulation member 24 and the outer peripheral surface of the inner cylinder 12 is the narrowest in the vehicle front-and-back direction, it is possible to secure a large amount of relative displacement between the outer cylinder 11 (vehicle frame F) and the inner cylinder 12 (cab C) in a lateral direction (vehicle width direction), in which a relative displacement tends to be relatively large, among the radial direction.

The scope of the present disclosure is not limited to each of the aforementioned embodiments, and various modifications can be made within the scope of not deviating from the gist of the present disclosure.

For example, as the regulation member 14 or 24, a configuration constituted of plates provided at intervals in the circumferential direction, without any inner circumferential surface 14a or 24a surrounding the entire circumference of the outer peripheral surface of the inner cylinder 12, may be adopted.

The inner diameter of the inner cylinder 12 or the inner diameter of the fit tube 15a may vary with position varying upward or downward, so that the fixing bolt B moves the inner cylinder 12 at required timing.

In addition, within the scope of not deviating from the gist of the present disclosure, it is possible to replace the components in the aforementioned embodiments with known components as appropriate, and it is also possible to combine the aforementioned embodiments and variations as appropriate.

For example, aspects of the present disclosure are as follows.
<1> A cab mount comprising:
   an outer cylinder configured to be attached to a vehicle body frame;
   an inner cylinder configured to be inserted inside the outer cylinder and attached to a cab;
   body rubber configured to connect between an inner peripheral surface of the outer cylinder and an outer peripheral surface of the inner cylinder with each other; and
   a regulation member configured to be attached to an upper end opening edge of the outer cylinder, the regulation member being configured to be provided so as to protrude inward in a radial direction than the inner peripheral surface of the outer cylinder and to leave a gap in the radial direction between the regulation member and the outer peripheral surface of the inner cylinder.
<2> The cab mount according to <1>, wherein the regulation member is configured to be provided in a non-adhering state to the body rubber.
<3> The cab mount according to <1> or <2>, wherein
   the regulation member is configured to have an inner circumferential surface that surrounds the entire circumference of the outer peripheral surface of the inner cylinder,
   the cab mount is configured to be attached to a vehicle such that the gap between the inner circumferential surface of the regulation member and the outer peripheral surface of the inner cylinder is the narrowest in a vehicle front-and-back direction.
<4> The cab mount according to any one of <1> to <3>, wherein the regulation member is configured with a rib at an inner end in the radial direction, the rib being configured to protrude in a vertical direction.
<5> The cab mount according to any one of <1> to <4>, wherein
   a fit tube is fitted into an upper end of the inner cylinder,
   a fixing bolt is integrally inserted inside each of the inner cylinder and the fit tube, and
   the inner diameter of the inner cylinder or the inner diameter of the fit tube varies with position varying upward or downward.

### REFERENCE SIGNS LIST

- 1, 2, 3: cab mount
- 11: outer cylinder
- 12: inner cylinder
- 13: body rubber
- 14, 24: regulation member
- 14a, 24a: inner circumferential surface
- 21, 23: rib
- C: cab
- F: vehicle frame

## Claims

1. A cab mount comprising:
an outer cylinder configured to be attached to a vehicle body frame;
an inner cylinder configured to be inserted inside the outer cylinder and attached to a cab;
body rubber configured to connect between an inner peripheral surface of the outer cylinder and an outer peripheral surface of the inner cylinder with each other; and
a regulation member configured to be attached to an upper end opening edge of the outer cylinder, the regulation member being configured to be provided so as to protrude inward in a radial direction than the inner peripheral surface of the outer cylinder and to leave a gap in the radial direction between the regulation member and the outer peripheral surface of the inner cylinder.

2. The cab mount according to claim 1, wherein the regulation member is configured to be provided in a non-adhering state to the body rubber.

3. The cab mount according to claim 1 or 2, wherein
the regulation member is configured to have an inner circumferential surface that surrounds an entire circumference of the outer peripheral surface of the inner cylinder,
the cab mount is configured to be attached to a vehicle such that the gap between the inner circumferential surface of the regulation member and the outer peripheral surface of the inner cylinder is narrowest in a vehicle front-and-back direction.

4. The cab mount according to claim 1 or 2, wherein the regulation member is configured with a rib at an inner end in the radial direction, the rib being configured to protrude in a vertical direction.

5. The cab mount according to claim 1 or 2, wherein
a fit tube is fitted into an upper end of the inner cylinder,
a fixing bolt is integrally inserted inside each of the inner cylinder and the fit tube, and
an inner diameter of the inner cylinder or an inner diameter of the fit tube varies with position varying upward or downward.
